# EUROPÄISCHE PATENTSCHRIFT

(11) **EP 3 460 963 B1**
(45) Veröffentlichungstag und Bekanntmachung des Hinweises auf die Patenterteilung: **01.04.2020**
(21) Anmeldenummer: 18194805.0
(22) Anmeldetag: 17.09.2018
(51) Int. Cl.: H02K 7/106, H02K 41/03, H02K 3/16

(54) **ELEKTROMOTOR, INSBESONDERE LINEARMOTOR MIT FESTSETZBAREM LÄUFER**
ELECTRIC MOTOR, IN PARTICULAR LINEAR MOTOR HAVING FIXABLE ROTOR
MOTEUR ÉLECTRIQUE, EN PARTICULIER MOTEUR LINÉAIRE À ROTOR POUVANT ÊTRE FIXÉ

(30) Priorität: 26.09.2017 DE 102017122262
(43) Veröffentlichungstag der Anmeldung: 27.03.2019
(73) Patentinhaber: SCHUNK Electronic Solutions GmbH, 78112 St. Georgen (DE)
(72) Erfinder: Ruggieri, Patrick, 78647 Trossingen (DE); Heilmann, Matthias, 78126 Königsfeld (DE)
(74) Vertreter: DREISS Patentanwälte PartG mbB

(56) Entgegenhaltungen:
- DE-A1- 3 641 189
- DE-B- 1 128 911
- GB-A- 821 432
- GB-A- 1 360 834
- JP-A- S60 255 052
- US-A1- 2011 181 141

## Beschreibung

Die Erfindung betrifft einen Elektromotor, insbesondere einen Linearmotor, mit einem Stator und einem gegenüber dem Stator beweglich angeordneten Läufer, wobei der Stator bzw. der Läufer Spulenträger mit Spulen zur Erzeugung eines magnetischen Wanderfeldes und der Läufer bzw. der Stator im Motorbetrieb mit dem Wanderfeld zusammenwirkende Permanentmagnete aufweist.

Derartige Elektromotoren sind in vielfältiger Art und Weise, insbesondere als Linearmotoren, aus dem Stand der Technik bekannt. Dabei wird das Magnetfeld des Läufers mit dem Magnetfeld des Stators so kombiniert, dass der Läufer ein Wegstück "nach vorne" gezogen wird und vom Magnetfeld hinter sich abgestoßen wird. Hat der Läufer eine bestimmte Position erreicht, zu der er gezogen wurde, so wird umgepolt, und der Läufer wird von dieser Position nun weggedrückt und zum nächsten Magneten hingezogen. Dadurch, dass der Läufer zwei etwas versetzte Magnetfeld-Erzeuger besitzt, befindet sich immer mindestens einer davon gerade "auf halbem Weg", was eine Festlegung der Laufrichtung ermöglicht.

Aus der GB 821 432 A, der DE 36 411 89 A1 und der JP S60 255 052 A sind elektrische Antriebseinheiten bekannt, welche eine elektromotorische Bremse zum Abbremsen und Festsetzen des Läufers aufweisen. Eine solche Bremse wird durch Vorsehen einer Bremswicklung bzw. eines bestrombaren Elektromagneten gebildet. Weitere elektrische Antriebseinheiten sind aus der US2011181141 A1 und der GB 1 360 834 A bekannt.

Insbesondere in der Handhabungstechnik besteht der Wunsch, Elektromotoren, bzw. deren Läufer, bei Erreichen einer bestimmten Position und/oder bei abgeschaltenem Motorbetrieb festzusetzen.

Diese Aufgabe wird durch einen Elektromotor mit den Merkmalen des Patentanspruchs 1 gelöst.

Dadurch kann erreicht werden, dass insbesondere ohne zusätzliche mechanische Bauteile ein sicheres Festsetzen durch entsprechende Umpolung des umpolbaren Magneten erreicht werden kann.

Die Erfindung eignet sich dabei nicht nur für Linearmotoren, sondern auch für Rotationsmotoren, bei denen der Läufer als um eine Achse drehender Rotor ausgebildet ist. Je nach Ausführungsform des erfindungsgemäßen Elektromotors kann vorgesehen sein, dass die Spulenträger am Stator oder am Läufer vorgesehen sind, wobei dann die Permanentmagnete am Läufer oder am Stator anzuordnen sind.

Das Wanderfeld kann zum einen dann abgeschalten werden, wenn eine bestimmte Position des Läufers erreicht wird.

Andererseits ist denkbar, dass das Wanderfeld dann abgeschalten wird, wenn die Stromversorgung des Elektromotors unterbrochen wird.

Vorteilhafterweise kann vorgesehen sein, dass an mehreren oder allen Spulenträgern mehrere umpolbare Magnete vorgesehen sind, die in einer Polkonfiguration bei abgeschaltetem Wanderfeld zum Festsetzen des Läufers die jeweils gegenüberliegenden Permanentmagnete anziehen oder abstoßen. Mit den umpolbaren Magneten wird dabei vorzugsweise ein Magnetfeld erzeugt, das komplementär zu dem Magnetfeld der Permanentmagnete ist, so dass vorzugsweise über die gesamt Erstreckung der Spulenträger diese den Läufer festsetzen. Die Konfiguration des Magnetfelds der Permanentmagneten vor Abschalten des Wanderfeldes wird folglich gespeichert bzw. abgebildet, um den Läufer festzusetzen.

Der wenigstens eine umpolbare Magnet sowie die jeweils zugehörige Spule sind dabei so ausgebildet, dass der umpolbare Magnet durch eine durch die Spule fließenden Stromimpuls die Umpolung erfährt. Durch einen entsprechend hohen Stromimpuls lässt sich ein entsprechend hoher elektromagnetischer Puls erzeugen, der zu einer Umpolung des ersten Magneten führt. Der Stromimpuls soll dabei vorteilhafterweise eine Höhe erreichen, die dazu führt, dass alle magnetischen Bereiche innerhalb des umpolbaren Magneten umpolarisiert werden, damit der Magnet als solcher vollständig umgepolt wird.

Der umpolbare Magnet ist vorzugsweise ein Magnet mit einer geringen magnetischen Koerzitivfeldstärke, der also eine vergleichsweise geringe magnetische Stabilität aufweist. Der umpolbare Magnet kann insbesondere ein Magnet aus einer AlNiCo-Legierung sein.

Die Spule zur Umpolung des umpolbaren Magneten ist vorteilhafterweise so angeordnet, dass sie dem umpolbaren Magneten wenigstens abschnittsweise umgibt.

Ferner ist vorteilhaft, wenn der umpolbare Magnet in einer zweiten Polkonfiguration ein Magnetfeld erzeugt, das so geführt wird, dass es im Motorbetrieb keine oder eine unmerkliche Wirkung auf das Wanderfeld hat. Damit verhält sich der umpolbare Magnet während des Betriebs des Motors neutral oder weitgehend neutral. Zur geeigneten Führung des Magnetfelds können weitere Magnete und/oder Joche vorgesehen sein.

Ferner ist denkbar, dass der umpolbare Magnet in einer zweiten Polkonfiguration ein Magnetfeld erzeugt, das im Motorbetrieb das Wanderfeld unterstützt. Denkbar ist, dass der umpolbare Magnet während des Betriebs zwischen den beiden Polkonfigurationen so umgeschalten wird, dass eine Verstärkung des Wanderfeldes bewirkt wird.

Die Anordnung kann dabei derart sein, dass die Spulen sowohl das Wanderfeld erzeugen, als auch die Umpolung des wenigstens einen umpolbaren Magneten bewirken. Die Spulen haben dann eine Doppelfunktion; zum einen erzeugen sie das Wanderfeld, zum anderen wird eine Umpolung, insbesondere durch entsprechende Stromimpulse, bewirkt.

Andererseits ist denkbar, dass verschiedene Spulen Verwendung finden, nämlich das Spulen als Wanderfeldspulen zur Erzeugung des Wanderfeldes ausgebildet sind, und dass neben diesen Spulen eine oder mehrere Polarisierungsspulen zur Umpolung des wenigstens einen umpolbaren Magneten vorgesehen sind. Diese Spulen können dann unabhängig voneinander bestromt werden, so dass das Wanderfeld unabhängig von einer Umpolung des umpolbaren Magneten generiert wird. Diese Ausführungsform ist insbesondere dann vorteilhaft, wenn während der Erzeugung des Wanderfeldes der umpolbare Magnet das Wanderfeld nicht oder nur unmerklich beeinträchtigt, und dass dann eine Umpolung zur Festsetzung erfolgen soll, wenn das Wanderfeld abgeschalten wird.

Ferner ist denkbar, dass der Elektromotor eine Schalteinheit aufweist, die bei abgeschaltenem Wanderfeld, insbesondere auch bei einem Stromausfall in einer Netzversorgung, den umpolbaren Magnet in die erste Polkonfiguration umpolt, so dass der Läufer festgesetzt wird.

Der Spulenkörper kann einen Grundabschnitt und wenigstens zwei senkrecht zum Grundabschnitt verlaufende Kernabschnitte vorsehen, wobei in, am oder im Grundabschnitt ein umpolbarer Magnet angeordnet ist. Bei einem Zwei-Phasen-Sychronmotor sind vorzugsweise zwei Kernabschnitte vorgesehen; beim Drei-Phasen-Sychronmotors sind vorzugsweise drei Kernabschnitte vorgesehen. Dabei ist denkbar, dass mehrere Spulenträger entlang der Bewegungsbahn des Läufers angeordnet sein können.

Der umpolbare Magnet kann insbesondere im Bereich zwischen zwei Kernabschnitten vorgesehen sein.

Andererseits ist denkbar, dass der Spulenträger einen Grundabschnitt und wenigstens zwei senkrecht zum Grundabschnitt verlaufende Kernabschnitte vorsieht, wobei an wenigstens einem freien Ende eines Kernabschnitts ein umpolbarer Magnet angeordnet ist. Vorzugsweise ist an jedem freien Ende eines Kernabschnitts ein solcher umpolbarer Magnet angeordnet. Die umpolbaren Magnete sind dann räumlich nahe dem Permanentmagneten angeordnet, so dass zum Festsetzen des Läufers ein vergleichsweise geringes Magnetfeld bereitgestellt werden kann.
Der umpolbare Magnet kann insbesondere quaderförmig ausgebildet sein. Allerdings ist auch denkbar, dass umpolbare Magnet keilförmig ausgebildet ist, wodurch ein günstigeres Umpolen des Magneten möglich ist, da der Magnet im Bereich geringerer Materialstärke leichter eine Umpolung erfährt, als im Bereich größerer Materialstärke.

Weitere Einzelheiten und vorteilhafte Ausgestaltungen der Erfindung sind der nachfolgenden Beschreibung zu entnehmen, anhand derer verschiedene Ausführungsbeispiele der Erfindung näher beschrieben und erläutert sind.

Es zeigen:
- Figur 1: den schematischen Aufbau eines erfindungsgemäßen Elektromotors;
- Figur 2: eine erste Ausführungsform eines Spulenträgers des Elektromotors gemäß Figur 1;
- Figur 3: eine zweite Ausführungsform eines Spulenträgers des Elektromotors gemäß Figur 1; und
- Figur 4: eine dritte Ausführungsform eines Spulenträgers des Elektromotors gemäß Figur 1.

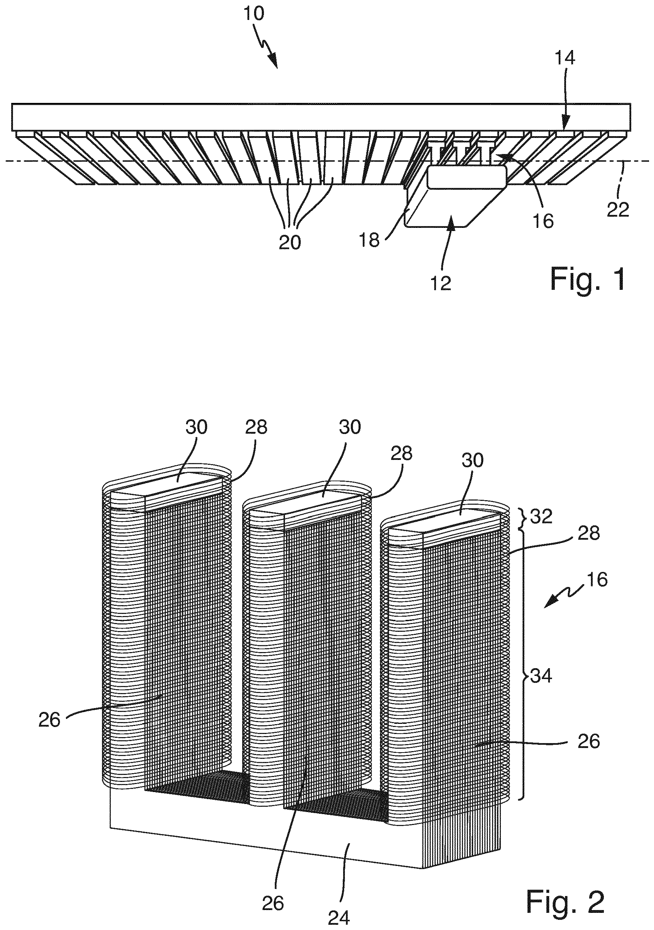

In der Figur 1 ist ein Elektromotor 10 dargestellt, der einen Stator 12 sowie einen gegenüber dem Stator 12 beweglich angeordneten Läufer 14 aufweist. Der Stator 12 weist einen Spulenträger 16 auf, der an einem Grundteil 18 angeordnet ist. Am Spulenträger 16 sind in Figur 1 nicht explizit dargestellte Spulen zur Erzeugung eines magnetischen Wanderfeldes vorgesehen. Dem Spulenträge 16, bzw. den Spulen gegenüberliegend sind am Läufer 14 Permanentmagnete 20 vorgesehen, wobei das Wanderfeld mit den Permanentmagneten 20 derart zusammenwirkt, dass der Läufer 14 je nach Bestromung der Spulen entlang der Linie 22 in die eine oder andere Richtung bewegt wird.

In der Figur 1 sind die Permanentmagnete 20 am Läufer 14 angeordnet und der Spulenträge 16 am Stator 12. Gemäß der Erfindung ist auch denkbar, dass am Stator 12 die Permanentmagnete angeordnet sind und am Läufer der Spulenträger mit den Spulen und den umpolbaren Magneten. In den Figuren 2, 3 und 4 sind verschiedenartig ausgebildete Spulenträger 16 gezeigt. Der jeweilige Spulenträger 16 ist dabei vorzugsweise als Blechpaket zur Vermeidung von unerwünschten Wirbelströmen ausgebildet.

In der Figur 2 ist ein Spulenträger 16 gezeigt, der einen Grundabschnitt 24 mit drei senkrecht zum Grundabschnitt 24 verlaufenden Kernabschnitten 26 aufweist. Um die Kernabschnitte 26 ist jeweils eine Spule 28 angeordnet.

An den freien Stirnseiten der Kernabschnitte 26 ist jeweils ein quaderförmig ausgebildeter umpolbarer Magnet 30 angeordnet, wobei die Mantelflächen der Magnete 30 mit der Mantelfläche des jeweiligen Kernabschnitts 26 vorzugsweise bündig abschließen. Die umpolbaren Magnete 30 erzeugen dabei in einer ersten Polkonfiguration jeweils ein Magnetfeld, das auf die gegenüberliegenden Permanentmagnete 20 so wirkt, dass die gegenüberliegenden Permanentmagnete bei abgeschaltetem Wanderfeld so angezogen oder abgestoßen werden, dass der Läufer 14 gegenüber dem Stator 12 festgesetzt wird.

Die umpolbaren Magnete 30 sind vorzugsweise AlNiCo-Magnete, die eine vergleichsweise geringe magnetische Stabilität aufweisen. Zur Umpolung der Magnete 30 wird die jeweilige Spule 28 mit einem kurzen, ausreichend hohem Stromimpuls bestromt.

Andererseits ist denkbar, dass neben der Spule 28 im Bereich 32, also in dem Bereich, der von dem jeweiligen umpolbaren Magnet 30 umgeben wird, eine separate bestrombare Polarisierungsspule vorgesehen ist, die dazu dient, den umpolbaren Magnet 30 von der einen Polkonfiguration in die andere Polkonfiguration zu überführen. Bei einer solchen Ausführungsform sind folglich neben den Polarisierungsspulen dann eigene Wanderfeldspulen vorgesehen, die sich über den Bereich 34 erstrecken.

Ferner ist vorteilhaft, wenn eine Schalteinheit vorgesehen ist, die bei Abschalten des Wanderfeldes die umpolbaren Magnete 30 derart umpolt, dass alle Magnete 30 mit den gegenüberliegenden Permanentmagneten 20 so zusammenwirken, dass der Läufer 14 am Stator 12 festgesetzt wird.

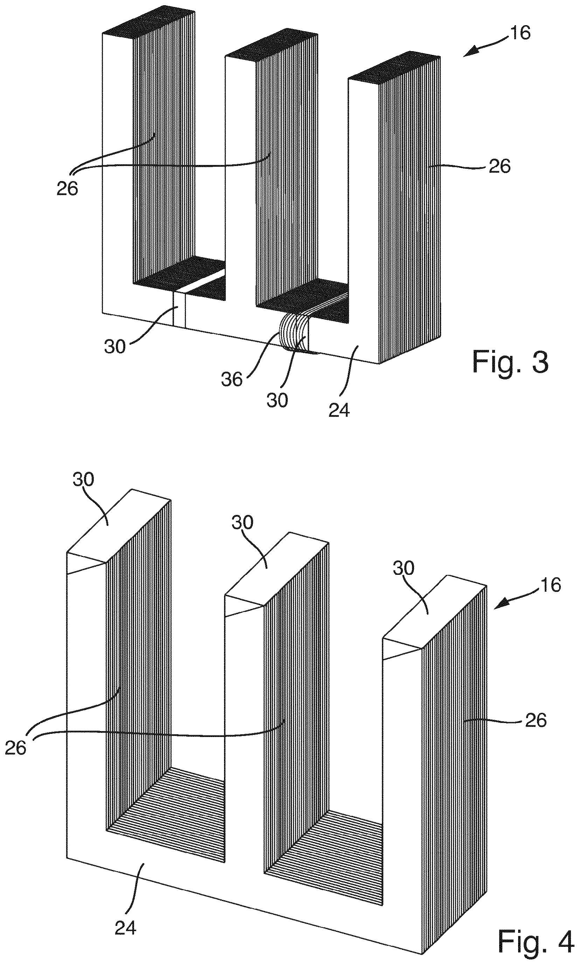

In den Figuren 3 und 4 sind die eigentlichen Spulen 28 nicht gezeigt.

Bei dem in der Figur 3 gezeigten Spulenträger 16 befinden sich die umpolbaren Magnete 30 nicht an den freien Enden der Kernabschnitte 26, sondern im Grundabschnitt 24 im Bereich zwischen zwei benachbarten Kernabschnitten 26. Hierbei ist denkbar, dass eine Umpolarisierungsspule 36 vorgesehen ist, die jeweils die umpolbaren Magnete 30 umschließt, wobei in der Figur 4 eine solche Umpolarisierungsspule mit dem Bezugszeichen 36 angedeutet ist.

Der in der Figur 4 gezeigte Spulenträger 16 unterscheidet sich von dem Spulenträger 16 gemäß Figur 2 dadurch, dass die umpolbaren Magnete 30 nicht quaderförmig, sondern keilförmig ausgebildet sind.

Die umpolbaren Magnete 30 weisen gemäß Figur 4 eine obere Seite auf, die parallel zum Grundabschnitt 24 verläuft. Die Unterseite der umpolbaren Magnete 30 verläuft in einem spitzen Winkel zur Oberseite der umpolbaren Magnete 30. Die keilförmige Ausbildung der umpolbaren Magnete 30 hat den Vorteil, dass ein Umpolen im Bereich der Spitze der Keilform aufgrund der geringen Materialstärke vergleichsweise schnell erfolgt, wobei die Umpolung im Bereich der größeren Materialstärke zeitlich danach erfolgt.

Erfindungsgemäß ist zudem denkbar, dass nicht nur ein in den Figuren gezeigter Spulenkörper 16 in einem Elektromotor 10 Verwendung findet, sondern mehrere Spulenkörper 16 nebeneinander und/oder hintereinander.
Auch wenn in den Figuren ein Linearmotor gezeigt ist, lässt sich die Erfindung genauso auf Rotationsmotoren übertragen, bei welchen die Permanentmagnete entlang einer Kreisbahn angeordnet sind.

Die Erfindung hat insgesamt den Vorteil, dass der Läufer 14 nach Abschalten des Wanderfeldes festgesetzt werden kann, ohne dass weitere Bauteile Verwendung finden müssen. Ein Festsetzen kann auch dann erfolgen, wenn ein Ausfall des Versorgungsnetzes detektiert wird, um eine ungewollte und unkontrollierte Bewegung des Schlittens zu verhindern.

## Patentansprüche

1. Elektromotor (10), insbesondere Linearmotor, mit einem Stator (12) und mit einem gegenüber dem Stator (12) beweglich angeordneten Läufer (14), wobei der Stator (12) bzw. der Läufer (14) Spulenträger (16) mit Spulen (28) zur Erzeugung eines magnetischen Wanderfelds und der Läufer (14) bzw. der Stator (12) im Motorbetrieb mit dem Wanderfeld zusammen wirkende Permanentmagnete (20) aufweist, **dadurch gekennzeichnet, dass** an wenigstens einem Spulenträger (16) ein umpolbarer Magnet (30) und eine zugehörige Spule (28) vorgesehen und derart ausgebildet sind, dass der umpolbare Magnet durch einen durch die zugehörige Spule (28) fließenden Stromimpuls eine vollständige Umpolung in eine entgegengesetzte Polkonfiguration erfährt, wobei der umpolbare Magnet (30) in einer ersten Polkonfiguration ein Magnetfeld erzeugt, das so auf wenigstens einen dem Spulenträger (16) gegenüberliegenden Permanentmagneten (20) wirkt, dass dieser bei abgeschaltetem Wanderfeld zum Festsetzen des Läufers (14) angezogen oder abgestoßen wird.

2. Elektromotor (10) nach Anspruch 1, **dadurch gekennzeichnet, dass** am Spulenträger (16) mehrere umpolbare Magnete vorgesehen sind, die in einer ersten Polkonfiguration bei abgeschaltetem Wanderfeld zum Festsetzen des Läufers (14) die jeweils gegenüberliegenden Permanentmagnete (20) anziehen oder abstoßen.

3. Elektromotor (10) nach einem der vorhergehenden Ansprüche, **dadurch gekennzeichnet, dass** der umpolbare Magnet (30) in einer zweiten Polkonfiguration ein Magnetfeld erzeugt, das so geführt wird, dass es im Motorbetrieb keine oder eine unmerkliche Wirkung auf das Wanderfeld hat.

4. Elektromotor (10) nach einem der Ansprüche 1 bis 2, **dadurch gekennzeichnet, dass** der umpolbare Magnet (30) in einer zweiten Polkonfiguration ein Magnetfeld erzeugt, das im Motorbetrieb das Wanderfeld unterstützt.

5. Elektromotor (10) nach einem der vorhergehenden (28) Ansprüche, dass die Spulen (28) sowohl das Wanderfeld erzeugen als auch die Umpolung des wenigstens eine umpolbaren Magneten (30) bewirken.

6. Elektromotor (10) nach einem der Ansprüche 1 bis 4, **dadurch gekennzeichnet, dass** als Spulen (28) Wanderfeldspulen zur Erzeugung des Wanderfeldes vorgesehen sind und/oder dass als Spulen Polarisierungsspulen (36) zur Umpolung des wenigstens einen umpolbaren Magneten (30) vorgesehen sind.

7. Elektromotor (10) nach einem der vorhergehenden Ansprüche, **dadurch gekennzeichnet, dass** der Spulenträger (16) einen Grundabschnitt (24) und wenigstens zwei senkrecht zum Grundabschnitt (24) verlaufende Kernabschnitte (26) vorsieht, wobei im, am oder im Grundabschnitt (24) ein umpolbare Magnet (30) angeordnet ist.

8. Elektromotor (10) nach einem der vorhergehenden Ansprüche, **dadurch gekennzeichnet, dass** der Spulenträger (16) einen Grundabschnitt (24) und wenigstens zwei senkrecht zum Grundabschnitt (24) verlaufende Kernabschnitte (26) vorsieht, wobei an wenigstens einem freien Ende eines Kernabschnitts (26) ein umpolbarer Magnet (30) angeordnet ist.

9. Elektromotor (10) nach Anspruch 8, **dadurch gekennzeichnet, dass** an allen freien Enden der Kernabschnitte (26) jeweils ein umpolbarer Magnet vorgesehen ist.

10. Elektromotor (10) nach einem der vorhergehenden Ansprüche, **dadurch gekennzeichnet, dass** der wenigstens eine umpolbare Magnet (30) quaderförmig ausgebildet ist.

11. Elektromotor (10) nach einem der Ansprüche 1 bis 10, **dadurch gekennzeichnet, dass** der wenigstens eine umpolbare Magnet (30) keilfömig ausgebildet ist.

## Claims

1. Electric motor (10), in particular linear motor, with a stator (12) and with a rotor (14) arranged movably relative to the stator (12), wherein the stator (12) or the rotor (14) has coil carriers (16) with coils (28) for generating a magnetic travelling field and the rotor (14) or the stator (12) has permanent magnets (20) which interact with the travelling field during motor operation, **characterized in that** on at least one coil carrier (16) a magnet (30) which can be reversed in polarity and an associated coil (28) are provided and are configured in such a way that the magnet which can be reversed in polarity is completely reversed in an opposite pole configuration by a current pulse flowing through the associated coil (28), wherein the pole-reversible magnet (30) in a first pole configuration generates a magnetic field which acts on at least one permanent magnet (20) opposite the coil carrier (16) in such a way that when the travelling field is switched off, the permanent magnet (20) is attracted or repelled to immobilize the rotor (14).

2. Electric motor (10) according to claim 1, **characterized in that** a plurality of magnets with reversed polarity are provided on the coil carrier (16), which in a first pole configuration attract or repel the respective opposite permanent magnets (20) when the travelling field is switched off in order to immobilize the rotor (14).

3. Electric motor (10) according to one of the preceding claims, **characterized in that** the pole-reversible magnet (30) in a second pole configuration generates a magnetic field which is guided in such a way that it has no or an imperceptible effect on the travelling field during motor operation.

4. Electric motor (10) according to any one of claims 1 to 2, **characterized in that** in a second pole configuration the pole-reversible magnet (30) generates a magnetic field which supports the travelling field during motor operation.

5. Electric motor (10) according to one of the preceding claims (28), in that the coils (28) both generate the travelling field and cause the polarity reversal of the at least one pole-reversible magnet (30).

6. Electric motor (10) according to one of the claims 1 to 4, **characterized in that** the coils (28) are provided as travelling field coils for generating the travelling field and/or that the coils are provided as polarizing coils (36) for reversing the polarity of the at least one pole-reversible magnet (30).

7. Electric motor (10) according to one of the preceding claims, **characterised in that** the coil carrier (16) provides a base section (24) and at least two core sections (26) extending perpendicularly to the base section (24), wherein a pole-reversible magnet (30) is arranged in, on or in the base section (24).

8. Electric motor (10) according to one of the preceding claims, **characterised in that** the coil carrier (16) provides a base section (24) and at least two core sections (26) extending perpendicularly to the base section (24), wherein a pole-reversible magnet (30) is arranged at at least one free end of a core section (26).

9. Electric motor (10) according to one of the preceding claims, **characterized in that** a pole-reversible magnet is provided at all free ends of the core sections (26).

10. Electric motor (10) according to one of the preceding claims, **characterized in that** the at least one pole-reversible magnet (30) is cuboid.

11. Electric motor (10) according to one of the claims 1 to 10, **characterised in that** the at least one pole-reversible magnet (30) is of wedge-shaped configuration.

## Revendications

1. Moteur électrique (10), en particulier un moteur linéaire, avec un stator (12) et avec un rotor (14) disposé de manière mobile par rapport au stator (12), le stator (12) ou le rotor (14) présentant des porte-bobines (16) avec des bobines (28) pour générer un champ magnétique mobile et le rotor (14) ou le stator (12) présentant des aimants permanents (20) qui interagissent avec le champ mobile pendant le fonctionnement du moteur, **caractérisé en ce que** sur au moins un porte-bobine (16) sont prévus un aimant (30) à polarité réversible et une bobine (28) associée, qui sont conçus de telle sorte que l'aimant à polarité réversible est complètement inversé dans une configuration polaire opposée par une impulsion de courant traversant la bobine (28) associée, dans lequel l'aimant (30), qui peut être inversé, génère un champ magnétique dans une première configuration polaire qui agit sur au moins un aimant permanent (20) opposé au porte-bobine (16) de telle sorte que, lorsque le champ mobile est désactivé, cet aimant permanent (20) est attiré ou repoussé pour immobiliser le rotor (14).

2. Moteur électrique (10) selon la revendication 1, **caractérisé en ce que** sur le porte-bobine (16) sont prévus plusieurs aimants à polarité inversée qui, dans une première configuration polaire, attirent ou repoussent les aimants permanents (20) respectivement opposés lorsque le champ de déplacement est coupé afin de fixer le rotor (14).

3. Moteur électrique (10) selon l'une des revendications précédentes, **caractérisé en ce que** l'aimant (30), qui peut être inversé, dans une deuxième configuration de pôles génère un champ magnétique qui est guidé de telle manière qu'il n'a pas d'effet ou un effet imperceptible sur le champ de déplacement pendant le fonctionnement du moteur.

4. Moteur électrique (10) selon l'une quelconque des revendications 1 à 2, **caractérisé en ce que** l'aimant (30), qui peut être inversé, dans une deuxième configuration de pôles génère un champ magnétique qui est guidé de telle manière qui soutient le champ de déplacement pendant le fonctionnement du moteur.

5. Moteur électrique (10) selon l'une des affirmations précédentes selon laquelle les bobines (28) génèrent toutes deux le champ mobile et provoquent également l'inversion de la polarité d'au moins un aimant (3) qui peut être inversé.

6. Moteur électrique (10) selon l'une des revendications 1 à 4, **caractérisé en ce que** des bobines de champ mobile pour la génération du champ mobile sont prévues comme bobines (28) et/ou **en ce que** des bobines de polarisation (36) pour l'inversion de la polarité d'au moins un aimant (30) qui peut être inversé sont prévues comme bobines.

7. Moteur électrique (10) selon l'une des revendications précédentes, **caractérisé en ce que** le porte-bobine (16) présente une section de base (24) et au moins deux sections de noyau (26) s'étendant perpendiculairement à la section de base (24), un aimant (30), qui peut être inversé, étant disposé dans, sur ou dans la section de base (24).

8. Moteur électrique (10) selon l'une des revendications précédentes, **caractérisé en ce que** le porte-bobine (16) présente une section de base (24) et au moins deux sections de noyau (26) s'étendant perpendiculairement à la section de base (24), un aimant (30), qui peut être inversé, étant disposé à au moins une extrémité libre d'une section de noyau (26).

9. Moteur électrique (10) selon l'une des revendications précédentes, **caractérisé en ce que** sur toutes les extrémités libres des sections de noyau (26) est prévu un aimant avec inversion de polarité.

10. Moteur électrique (10) selon l'une des revendications précédentes, **caractérisé en ce que** le au moins un aimant (30), qui peut être inversé, est de forme parallélépipédique.

11. Moteur électrique (10) selon l'une des revendications 1 à 10, **caractérisé en ce que** le au moins un aimant (30), qui peut être inversé, est de construction cunéiforme.
